# EUROPEAN PATENT APPLICATION

(11) **EP 4 806 929 A1**
(43) Date of publication of application: **16.09.2026**
(21) Application number: 24888763.0
(22) Date of filing: 07.11.2024
(51) Int. Cl.: C08F 14/18, C08F 16/24, C08F 16/30, C25B 9/00, C25B 13/08, H01B 1/06

(54) **FLUORINE-CONTAINING POLYMER, ELECTROLYTE FILM, MEMBRANE ELECTRODE ASSEMBLY, WATER ELECTROLYSIS DEVICE, PRODUCTION METHOD FOR HYDROGEN, AND PRODUCTION METHOD FOR FLUORINE-CONTAINING POLYMER**

(30) Priority: 07.11.2023 JP 2023189963
(71) Applicant: AGC Inc., Chiyoda-ku Tokyo 100-8405 (JP)
(72) Inventor: HAYABE, Shintaro, Tokyo 100-8405 (JP); SUMIKURA, Kosuke, Tokyo 100-8405 (JP); SAWADA, Toshiaki, Tokyo 100-8405 (JP); KOMATSU, Ken, Tokyo 100-8405 (JP)
(74) Representative: Müller-Boré & Partner Patentanwälte PartG mbB
(86) International application number: PCT/JP2024/039567
(87) International publication number: WO 2025/100470

(57) **Abstract**

To provide a fluorinated polymer, from which such a polymer membrane can be produced that when a laminate having a polymer membrane that contains a fluorinated polymer having groups convertible to ion exchange groups sandwiched between transfer base materials is subjected to hot pressing and then the transfer base materials are peeled from the laminate, few pinholes are formed in the polymer membrane. To provide an electrolyte membrane using the fluorinated polymer, a membrane electrode assembly and a water electrolyzer. The fluorinated polymer of the present disclosure is a fluorinated polymer having units based on tetrafluoroethylene and having groups convertible to ion exchange groups, wherein no endothermic peak is observed within a range of 300 to 350°C measured by differential scanning calorimetry.

## Description

### TECHNICAL FIELD

The present disclosure relates to a fluorinated polymer, an electrolyte membrane, a membrane electrode assembly, a water electrolyzer, a hydrogen production method and a fluorinated polymer production method.

### BACKGROUND ART

Fluorinated polymers having groups convertible to ion exchange groups (hereinafter also referred to as precursor polymer) are widely used for production of electrolyte membranes to be used for water electrolyzer, etc.

As a method for producing such an electrolyte membrane, Patent Document 1 discloses the following method. First, a PET film, a film comprising a precursor polymer, a woven fabric, a film comprising a precursor polymer and a PET film are stacked in this order to obtain a laminate. The obtained laminate is hot-pressed, and the PET films on the both sides of the laminate are separated to obtain a precursor membrane. The groups convertible to ion exchange groups in the obtained precursor membrane are hydrolyzed and converted to acid form, whereby an electrolyte membrane containing a fluorinated polymer having ion exchange groups is obtained.

### PRIOR ART DOCUMENTS

### PATENT DOCUMENTS

Patent Document 1: WO2020/162511

### DISCLOSURE OF INVENTION

### TECHNICAL PROBLEM

In recent years, further improvement in the performance of the electrolyte membrane is required. In order to improve the performance of the electrolyte membrane, the present inventors have noticed suppression of pinholes formed in the electrolyte membrane. A pinhole, which is a perforation, is a defect which may cause an increase of movement of substances between anode and cathode sides or between positive electrode and negative electrode sides, which had been prevented by an electrolyte membrane for electrolysis or for cells. Further, a pinhole may lead to breakage or short circuiting that originates from it.

The present inventors have produced an electrolyte membrane by the method in accordance with the above Patent Document 1 and as a result found that further suppression of pinholes may be achieved.

Under these circumstances, according to an aspect of the present disclosure, an object is to provide a fluorinated polymer and a fluorinated polymer production method, by which such a polymer membrane can be produced that when a laminate having a polymer membrane containing a fluorinated polymer having groups convertible to ion exchange groups sandwiched between transfer base materials is subjected to hot pressing and then the transfer base materials are peeled from the laminate, few pinholes are formed in the polymer membrane.

According to another aspect of the present invention, an object is to provide an electrolyte membrane obtained by using the fluorinated polymer, a membrane electrode assembly and a water electrolyzer.

According to still another aspect of the present invention, an object is to provide a hydrogen production method using the above water electrolyzer.

### SOLUTION TO PROBLEM

The present disclosure includes the following embodiments.
[1] A fluorinated polymer having units based on tetrafluoroethylene and having groups convertible to ion exchange groups,
   wherein no endothermic peak is obtained within a range of 300 to 350°C measured by differential scanning calorimetry.
[2] The fluorinated polymer according to [1], which has units based on a compound represented by the formula (1).

   formula (1) CF₂=CF-L-(A)ₙ

   In the formula (1), L is a (n+1)-valent perfluorohydrocarbon group having 3 or more carbon atoms, which may contain an etheric oxygen atom, A is a group convertible to a sulfonic acid functional group, and n is 1 or 2.
[3] The fluorinated polymer according to [1] or [2], which has units based on a compound represented by the formula (1-3) described later or units based on a compound represented by the formula (1-4) described later.
   In the formula (1-3) and the formula (1-4), R^{f1} is a perfluoroalkylene group which may contain an oxygen atom between carbon atoms, R^{f2} is a single bond or a perfluoroalkylene group which may contain an oxygen atom between carbon atoms, R^{f3} is a single bond or a perfluoroalkylene group which may contain an oxygen atom between carbon atoms, r is 0 or 1, m is 0 or 1, and A is a group convertible to a sulfonic acid functional group.
[4] An electrolyte membrane comprising a fluorinated polymer having, in the fluorinated polymer as defined in any one of [1] to [3], the groups convertible to ion exchange groups converted to ion exchange groups.
[5] The electrolyte membrane according to [4], which further contains a reinforcing material.
[6] A membrane electrode assembly, which comprises:
   the electrolyte membrane as defined in [4] or [5],
   a cathode catalyst layer provided on one side of the electrolyte membrane, and
   an anode catalyst layer provided on the other side of the electrolyte membrane.
[7] A water electrolyzer comprising:
   the membrane electrode assembly as defined in [6],
   a power supply unit connected to the cathode catalyst layer side and the anode catalyst layer side in the membrane electrode assembly, and
   a water supply unit to supply water to the anode catalyst layer side.
[8] A hydrogen production method, which comprises electrolyzing water to produce hydrogen by the water electrolyzer as defined in [7].
[9] A fluorinated polymer production method, which comprises polymerizing tetrafluoroethylene and a fluorinated monomer having a group convertible to an ion exchange group in a reactor to produce a fluorinated polymer, wherein in the polymerization, an upper-part surface of the exterior of the reactor was covered with a heat insulating material.
[10] The fluorinated polymer production method according to [9], wherein after the polymerization, deposits are removed from the upper-part surface of the interior of the reactor.

### ADVANTAGEOUS EFFECTS OF INVENTION

According to an aspect of the present invention, provided are a fluorinated polymer and a fluorinated polymer production method, by which such a polymer membrane can be produced that when a laminate having a polymer membrane containing a fluorinated polymer having groups convertible to ion exchange groups sandwiched between transfer base materials is subjected to hot pressing and then the transfer base materials are peeled from the laminate, few pinholes are formed in the polymer membrane.

According to another aspect of the present invention, provided are an electrolyte membrane obtained by using the fluorinated polymer, a membrane electrode assembly and a water electrolyzer.

According to still another aspect of the present invention, provided is a hydrogen production method using the water electrolyzer.

### BRIEF DESCRIPTION OF DRAWINGS

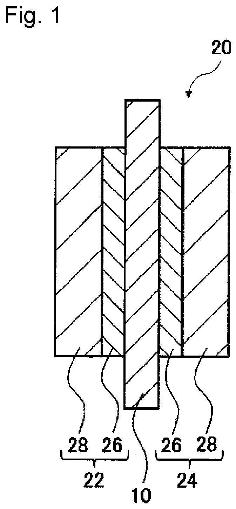

Fig. 1 is a cross-sectional view schematically illustrating an example of the membrane electrode assembly of the present disclosure.

### DESCRIPTION OF EMBODIMENTS

The following definitions of terms apply throughout the present specification and claims unless otherwise specified.

An "ion exchange group" refers to a group containing at least one ion exchangeable for a different ion, such as a sulfonic acid functional group and a carboxylic acid functional group as described below.

A "sulfonic acid functional group" refers to a sulfonic acid group (-SO₃H) or a sulfonate group. The sulfonate group may be, for example, (-SO₃⁻)Ma⁺, (-SO₃⁻)₂Mb²⁺ or (-SO₃⁻)₃Mc³⁺ (where Ma⁺ is an alkali metal ion or a quaternary ammonium cation; Mb²⁺ is a divalent metal ion; Mc³⁺ is a trivalent metal ion). When there are two ligands, the number of ion exchange groups is counted as 2, and when there are three ligands, the number of ion exchange groups is counted as 3.

A "carboxylic acid functional group" refers to a carboxylic acid group (-COOH) or a carboxylate group. The carboxylate group may be, for example, (-COO⁻)Ma⁺, (-COO⁻ )₂Mb²⁺ or (-COO⁻)₃Mc³⁺ (where Ma⁺ is an alkali metal ion or a quaternary ammonium cation; Mb²⁺ is a divalent metal ion; and Mc³⁺ is a trivalent metal ion). When there are two ligands, the number of ion exchange groups is counted as 2, and when there are three ligands, the number of ion exchange groups is counted as 3.

A "precursor membrane" refers to a membrane containing a polymer having groups convertible to ion exchange groups.

A "group convertible to an ion exchange group" refers to a group that can be converted to an ion exchange group by known treatments such as hydrolysis and conversion to acid form.

A "group convertible to a sulfonic acid functional group" refers to a group that can be converted to a sulfonic acid functional group by known treatments such as hydrolysis and conversion to acid form.

A "group convertible to a carboxylic acid functional group" refers to a group that can be converted to a carboxylic acid functional group by treatments such as hydrolysis and conversion to acid form.

A "unit" in a polymer refers to an atomic group derived from a single monomer molecule, which is formed by polymerization reaction of the monomer. A unit may be an atomic group formed directly by polymerization or may be an atomic group formed by polymerization followed by modification to a partially different structure. In the following, in some cases, units derived from a certain monomer will be represented by the monomer name, followed by "units".

A numerical range expressed using "to" means a range including numerical values described before and after "to" as the lower and upper limits. In a series of numerical ranges described in the present specification, the upper limit or lower limit of a numerical range may be replaced by the upper limit or lower limit of another numerical range in the same series. The upper limit or lower limit of any numerical range described in the present specification may be replaced by any of numerical values indicated in Examples.

### [Fluorinated polymer (I')]

The fluorinated polymer of the present disclosure (hereinafter also referred to as "fluorinated polymer (I')") is a fluorinated polymer having units based on tetrafluoroethylene (hereinafter also referred to as "TFE") and having groups convertible to ion exchange groups (hereinafter also referred to as "precursor group"), wherein no endothermic peak is observed within a range of 300 to 350°C measured by differential scanning calorimetry (hereinafter also referred to as "DSC").

By use of the fluorinated polymer (I'), a polymer membrane (for example a precursor membrane or an electrolyte membrane) with few pinholes can be produced. The reason is not clearly understood in detail yet, but is considered to be as follows.

In a case where a fluorinated polymer having precursor groups is to be produced by using TFE, fine particles of polytetrafluoroethylene (hereinafter also referred to as "PTFE") which is a homopolymer of TFE and fine particles of a high melting point crystalline component containing TFE units as the main component may form as byproducts in some cases. Thus, a fluorinated polymer having precursor groups produced by using TFE may include the above fine particles in some cases.

If a fluorinated polymer having such fine particles included therein is used to form a membrane, which is sandwiched between transfer base materials, the resulting laminate is hot-pressed, and then the transfer base materials are peeled to obtain a precursor membrane, the fine particles present in the membrane may sometimes be separated together with the transfer base materials. Then, in the obtained precursor membrane, pinholes originating from the particles may form. As a result, in an electrolyte membrane formed by using the precursor membrane also, pinholes that had been present in the precursor membrane are considered to be present.

The endothermic peak within a range of 300 to 350°C measured by DSC is a peak attributable to PTFE, and the fluorinated polymer (I') has no endothermic peak observed within a range of 300 to 350°C measured by DSC. Thus, even when a membrane of the fluorinated polymer (I') is sandwiched between transfer base materials and hot-pressed, and then the transfer base materials are separated, it is considered that the obtained polymer membrane (for example, the precursor membrane or the electrolyte membrane) is less likely to have pinholes originating from the fine particles.

Further, the fluorinated polymer (I') is preferably such that when a cross section of an electrolyte membrane formed from the fluorinated polymer (I') is observed with a scanning electron microscope, no fine particles with diameters larger than 100 nm are observed, it is more preferred that only fine particles with diameters of 50 to 100 nm are observed, and it is particularly preferred that no fine particles are observed.

Even if no endothermic peak by DSC is observed, a very little amount of byproducts may form to such an extent that no endothermic peak is observed by DSC in some cases. It is considered that when no fine particles with diameters of 100 nm or more are observed in the cross section of the electrolyte membrane, the probability of occurrence of pinholes can further be lowered. The method to observe the fine particles is as described in Examples described later.

The fluorinated polymer (I') is not particularly limited so long as it is a polymer having TFE units and having a precursor group, and is preferably a copolymer having TFE units and units based on a fluorinated monomer having a precursor group (for example, a group convertible to a sulfonic acid functional group and a group convertible to a carboxylic acid functional group), and with a view to further reducing the electrolysis voltage when the resulting electrolyte membrane is applied to a water electrolyzer, more preferably a copolymer having TFE units and units based on a fluorinated monomer having a group convertible to a sulfonic acid functional group (hereinafter also referred to as "fluorinated monomer (S')") (hereinafter this copolymer will also be referred to as "fluorinated polymer (S')").

The fluorinated monomer (S') may be a compound having one or more fluorine atoms in its molecule, having an ethylenic double bond and having a group convertible to a sulfonic acid functional group.

The fluorinated monomer (S') is preferably a compound represented by the formula (1), in view of the monomer production cost, the reactivity with other monomers and the ability to give the fluorinated polymer (S) with excellent properties.

formula (1) CF₂=CF-L-(A)ₙ

L is a (n+1)-valent perfluorohydrocarbon group which may contain an etheric oxygen atom.

The etheric oxygen atom may be located at a terminal end or may be located between carbon atoms of the perfluorohydrocarbon group.

The number of carbon atoms in the (n+1)-valent perfluorohydrocarbon group is preferably 1 or more, more preferably 2 or more, further preferably 3 or more, and preferably 20 or less, more preferably 10 or less.

As L, preferred is a (n+1)-valent perfluoroaliphatic hydrocarbon group which may contain an etheric oxygen atom. More preferred is a divalent perfluoroalkylene group which may contain an etheric atom oxygen atom as corresponding to an embodiment of n = 1, or a trivalent perfluoroaliphatic hydrocarbon group which may contain an etheric oxygen atom as corresponding to an embodiment of n = 2.

The above-mentioned divalent perfluoroalkylene group may be linear or branched.

A is a group convertible to a sulfonic acid functional group. As the group convertible to a sulfonic acid functional group, preferred is a functional group that can be converted to a sulfonic acid functional group by hydrolysis. Specific examples of the group convertible to a sulfonic acid functional group include -SO₂F, -SO₂Cl and - SO₂Br.

n is 1 or 2. When n is 2, the two A may be the same or different.

The compound represented by the formula (1) is preferably a compound represented by the formula (1-1), a compound represented by the formula (1-2), a compound represented by the formula (1-3) or a compound represented by the formula (1-4).

formula (1-1) CF₂=CF-O-R^{f1}-A

formula (1-2) CF₂=CF-R^{f1}-A

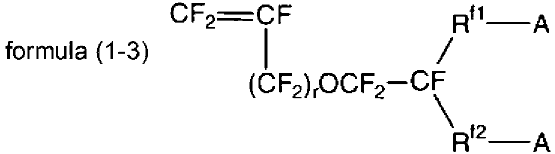

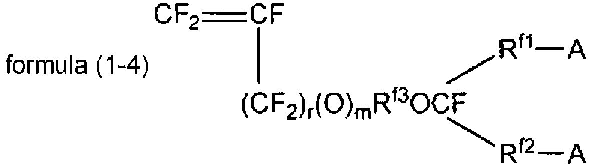

R^{f1} is a perfluoroalkylene group which may contain an oxygen atom between carbon atoms. The number of carbon atoms in the perfluoroalkylene group is preferably 1 or more, more preferably 2 or more, further preferably 3 or more, and is preferably 20 or less, more preferably 10 or less.

R^{f2} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

R^{f3} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

r is 0 or 1.

m is 0 or 1.

In the formulae, A is as defined above.

The compound represented by the formula (1-1) and the compound represented by the formula (1-2) are preferably a compound represented by the formula (1-5).

formula (1-5): CF₂=CF-(CF₂)ₓ-(OCF₂CFY)_{y}-O-(CF₂)_{z}-SO₃F

x is 0 or 1, y is an integer of 0 to 2, z is an integer of 1 to 4, and Y is F or CF_{3.}

Specific examples of the compound represented by the formula (1-1) include the following compounds. In the formulae, w is an integer of 1 to 8, and x is an integer of 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ₓ-SO₂F

Specific examples of the compound represented by the formula (1-2) include the following compounds. In the formulae, w is an integer of 1 to 8.

CF₂=CF-(CF₂)_{w}-SO₂F

CF₂=CF-CF₂-O-(CF₂)_{w}-SO₂F

As the compound represented by the formula (1-3), a compound represented by the formula (1-3-1) is preferred.

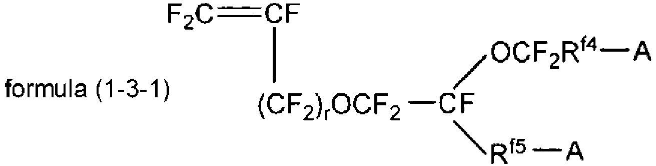

R^{f4} is a C₁₋₆ linear perfluoroalkylene group, and R^{f5} is a single bond or a C₁₋₆ linear perfluoroalkylene group which may contain an oxygen atom between carbon atoms. r and A are as defined above.

Specific examples of the compound represented by the formula (1-3-1) are as follows.

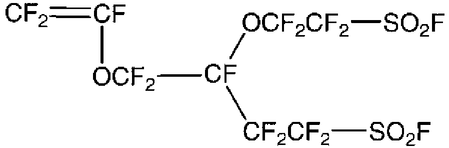

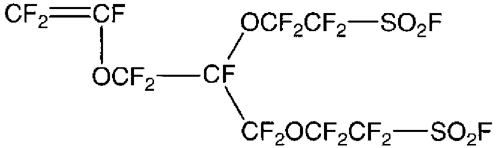

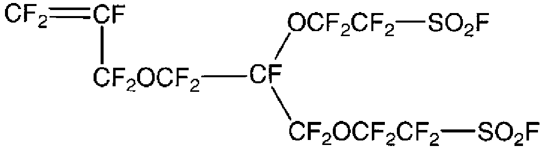

The compound represented by the formula (1-4) is preferably a compound represented by the formula (1-4-1).

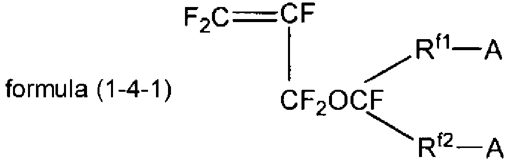

In the formula, R^{f1}, R^{f2} and A are as defined above.

Specific examples of the compound represented by the formula (1-4-1) are as follows.

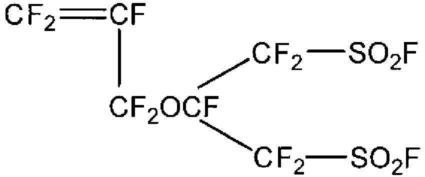

The fluorinated monomer (S') may be used alone or as a combination of two or more.

For production of the fluorinated polymer (S'), in addition to TFE and the fluorinated monomer (S'), other monomer may be used.

Specific examples of the other monomer include CF₂=CFR^{f6} (wherein R^{f6} is a C₂₋₁₀ perfluoroalkyl group), CF₂=CF-OR^{f7} (wherein R^{f7} is a C₁₋₁₀ perfluoroalkyl group), and CF₂=CFO(CF₂)ᵥCF=CF₂ (wherein v is an integer of 1 to 3).

The content of units based on the other monomer is preferably 30 mass% or less to all units in the fluorinated polymer (I') (preferably fluorinated polymer (S')) with a view to maintaining the ion exchange capacity.

The ion exchange capacity of the fluorinated polymer (I') may be adjusted by changing the content of the groups convertible to ion exchange groups in the fluorinated polymer (I').

The content of the TFE units to all units in the fluorinated polymer (S') is preferably 5 to 35 mol%.

The content of the units based on the fluorinated monomer (S') to all units in the fluorinated polymer (S') is preferably 65 to 95 mol%.

Of the fluorinated polymer (I'), no endothermic peak is observed within a range of 300 to 350°C measured by DSC.

Whether or not an endothermic peak is observed within a range of 300 to 350°C by DSC is judged from a DSC curve. The DSC curve is a curve having a horizontal axis indicating the temperature and a vertical axis indicating the heat flow, indicating heat absorption/generation amount of a sample (the fluorinated polymer), and is obtained by using a differential scanning calorimetry by a method in accordance with JIS K 7123-1987. The detailed measurement conditions are as described in Examples.

### <Fluorinated polymer (I') production method>

The fluorinated polymer (I') production method will be described with reference to a fluorinated polymer (S') production method as an example.

As an example of the fluorinated polymer (S') production method, a method of copolymerizing TFE and the fluorinated monomer (S') in a reactor in the presence of a polymerization initiator may be mentioned.

Specific examples of the copolymerization method include bulk polymerization, solution polymerization, suspension polymerization and emulsion polymerization.

In the case of solution polymerization, specific examples of the polymerization solvent include solvents (fluorinated solvents) such as chlorofluorocarbons, hydrochlorofluorocarbons, hydrofluorocarbons and hydrofluoroethers.

Specific examples of the polymerization initiator include diacyl peroxides (such as disuccinic peroxide, benzoyl peroxide, perfluorobenzoyl peroxide, lauroyl peroxide and bis(pentafluoropropionyl) peroxide), azo compounds (such as 2,2'-azobis(2-amidinopropane) hydrochloride, 4,4'-azobis(4-cyanovaleric acid), dimethyl 2,2'-azobisisobutyrate and azobisisobutyronitrile), peroxyesters (such as t-butyl peroxyisobutylate and t-butyl peroxypivalate), peroxydicarbonates (such as diisopropyl peroxydicarbonate and bis(2-ethylhexyl)peroxydicarbonate), hydroperoxides (such as diisopropylbenzene hydroperoxide and t-butyl hydroperoxide), and dialkyl peroxides (such as di-t-butyl peroxide and perfluoro-di-t-butyl peroxide).

The amount of the polymerization initiator added is preferably 0.0001 parts by mass or more, and is preferably 3 parts by mass or less, more preferably 2 parts by mass or less per 100 parts by mass of the monomer component.

By the amount of the polymerization initiator added being 3 parts by mass or less, the molecular weight of the fluorinated polymer can be increased.

In the fluorinated polymer (S') production method, in addition to the polymerization initiator, a molecular weight modifier or the like to be used in conventional solution polymerization may be added.

The monomers (TFE, the fluorinated monomer (S')) and the polymerization initiator may be added continuously or may be intermittently added to the reactor.

The amounts of TFE and the fluorinated monomer (S') added are properly determined so that the contents of the respective monomer units in the fluorinated polymer (S') are within the above ranges.

In a case where solution polymerization is employed, the polymerization temperature is preferably the boiling point under ordinary pressure, or higher, and 70°C or lower, of the polymerization solvent (particularly the above described fluorinated solvent) with the lowest boiling point under ordinary pressure.

When the polymerization temperature is 70°C or lower, the molecular weight of the obtained fluorinated polymer tends to be relatively high. The polymerization temperature is more preferably 65°C or lower, further preferably 60°C or lower.

The polymerization pressure (gage pressure) is preferably 0.1 to 5.0 MPaG, more preferably 0.5 to 3.0 MPaG. When the polymerization pressure (gage pressure) is within the above range, a practically satisfactory polymerization rate can be maintained, and a high molecular weight fluorinated polymer can be obtained.

In the fluorinated polymer (I') (fluorinated polymer (S')) production method, since TFE is used, deposits of PTFE or a high melting point crystalline component containing TFE units as the main component, as byproducts, may sometimes form. Such byproducts are likely to form particularly at the upper part of the reactor, and the byproducts formed at the upper part of the reactor may settle and be mixed with the fluorinated polymer in some cases.

The above-described problem is likely to occur if byproducts are included in the fluorinated polymer, and accordingly in the fluorinated polymer (I') production method, it is preferred to conduct a treatment to suppress inclusion of byproducts into the fluorinated polymer (I').

By the treatment to suppress inclusion of byproducts, a fluorinated polymer of which no endothermic peak is observed within a range of 300 to 350°C by DSC can readily be obtained.

Specific examples of the treatment to suppress inclusion of byproducts include a method of placing a heater on the upper-part surface of the exterior of the reactor to adjust the temperature thereby to prevent byproducts such as PTFE from forming, a method of heat-insulating the upper-part surface of the exterior of the reactor to adjust the temperature thereby to prevent byproducts such as PTFE from forming, and a method of peeling and removing the byproducts such as PTFE precipitated on the upper-part surface in the interior of the reactor e.g. by a rod or a comb.

As a method of heat-insulating the upper-part surface of the exterior of the reactor, a method of covering the surface with a heat-insulating material may be mentioned. In this case, it is preferred to cover the surface of the exterior of the reactor with an area ratio to the reactor exterior surface of preferably 30% or more, more preferably 50% or more from the upper-part of the reactor.

In a case of adjusting the temperature so as to prevent formation of PTFE, it is preferred to adjust the temperature so that the temperature of the exterior of the reactor and the interior of the heat insulating material will be 20°C or more, more preferably 30°C or more.

### [Electrolyte membrane]

The electrolyte membrane of the present disclosure contains a fluorinated polymer having the precursor groups in the fluorinated polymer (I') converted to ion exchange groups (hereinafter also referred to as "fluorinated polymer (I)").

The ion exchange groups of the fluorinated polymer (I) may be specifically sulfonic acid functional groups and carboxylic acid functional groups, and are preferably sulfonic acid functional groups, in that the electrolysis voltage when the electrolyte membrane is applied to a water electrolyzer can further be reduced.

Now, an embodiment of the fluorinated polymer having sulfonic acid functional groups (hereinafter also referred to as "fluorinated polymer (S)") will be mainly described in detail.

The fluorinated polymer (S) has TFE units and preferably has units having a sulfonic acid functional group and a fluorine atom.

The units having a sulfonic acid functional group and a fluorine atom are preferably units represented by the formula (2).

formula (2) -[CF₂-CF(-L-(SO₃M)ₙ)]-

In the formula (2), L and n are as defined above.

M is a hydrogen atom, an alkali metal or a quaternary ammonium cation.

The units represented by the formula (2) are preferably units represented by the formula (2-1), units represented by the formula (2-2), units represented by the formula (2-3) and units represented by the formula (2-4).

formula (2-1) -[CF2₋CF(-O-Rf¹⁻SO3_{M})]-

formula (2-2) -[CF2₋CF(-Rf¹⁻SO3_{M})]-

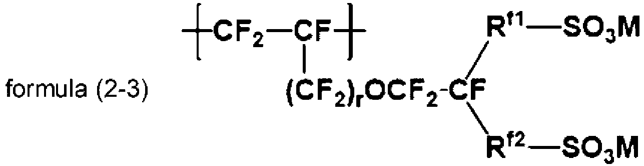

In the formulae, R^{f1}, R^{f2}, r and M are as defined above.

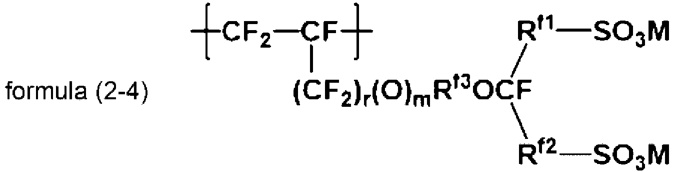

In the formula, R^{f1}, R^{f2}, R^{f3}, r, m and M are as defined above.

The units represented by the formula (2-1) and the units represented by the formula (2-2) are more preferably units represented by the formula (2-5).

formula (2-5) -[CF₂-CF(-(CF₂)ₓ-(OCF₂CFY)_{y}-O-(CF₂)_{z}-SO₃M)]-

In the formula, x, y, z, Y and M are as defined above.

Specific examples of the units represented by the formula (2-1) are as follows. In the formulae, w, x and M are as defined above.

-[CF₂-CF(-O-(CF₂)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ₓ-SO₃M)]-

Specific examples of the units represented by the formula (2-2) are as follows. In the formulae, w and M are as defined above.

-[CF₂-CF(-(CF₂)_{w}-SO₃M)]-

-[CF₂-CF(-CF₂-O-(CF₂)_{w}-SO₃M)]-

The units represented by the formula (2-3) are preferably units represented by the formula (2-3-1).

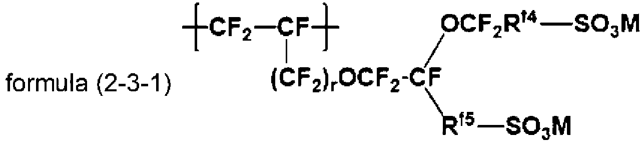

In the formula, R^{f4}, R^{f5}, r and M are as defined above.

Specific examples of the units represented by the formula (2-3-1) are as follows.

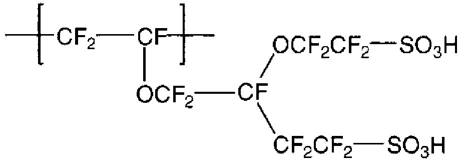

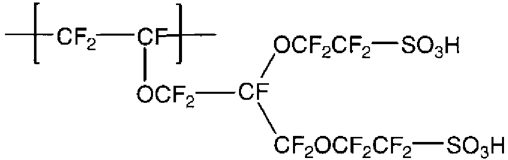

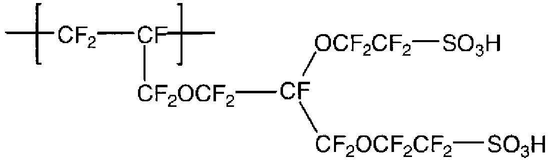

The units represented by the formula (2-4) are preferably units represented by the formula (2-4-1).

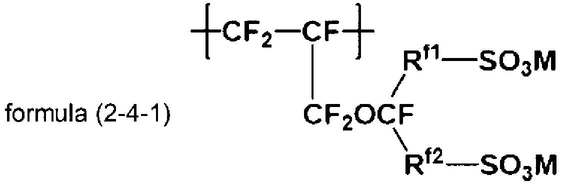

In the formula, R^{f1}, R^{f2} and M are as defined above.

Specific examples of units represented by the formula (2-4-1) are as follows.

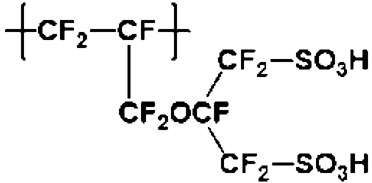

The units having a sulfonic acid functional group and a fluorine atom may be used alone or in combination of two or more.

The fluorinated polymer (I) may have, in addition to the TFE units and the units having a sulfonic acid functional group and a fluorine atom, units based on other monomer. Specific examples of the other monomer are as described above.

The content of the units based on other monomer is preferably 30 mass% or less to all units in the fluorinated polymer (I) with a view to maintaining the ion exchange performance.

The content of the fluorinated polymer (I) is preferably 95 to 100 mass% to the total mass of the electrolyte membrane.

The ion exchange capacity of the fluorinated polymer (I) is preferably 0.90 meq/g dry resin or more, more preferably more than 1.10 meq/g dry resin, further preferably 1.15 meq/g dry resin or more, particularly preferably 1.20 meq/g dry resin or more, most preferably 1.25 meq/g dry resin or more, in that the electrolysis voltage when the electrolyte membrane is applied to a water electrolyzer can further be reduced.

The ion exchange capacity of the fluorinated polymer (I) is preferably 2.00 meq/g dry resin or less, more preferably 1.50 meq/g dry resin or less, further preferably 1.43 meq/g dry resin or less, in consideration of the strength of the membrane electrode assembly in a hydrated state.

The fluorinated polymer (I) may be used alone, or a laminate or mixture of two or more types may be used.

The electrolyte membrane may be reinforced by a reinforcing material. The reinforcing material may, for example, be a porous body, a fiber, a woven fabric or a non-woven fabric. The reinforcing material may be made of a polytetrafluoroethylene, a tetrafluoroethylene/hexafluoropropylene copolymer, a tetrafluoroethylene/perfluoro(alkyl vinyl ether) copolymer, a polyethylene, a polypropylene, a polyphenylene sulfide or the like.

The thickness of the electrolyte membrane is preferably 30 µm or more, more preferably 50 µm or more, further preferably 70 µm or more, particularly preferably 90 µm or more, and preferably 300 µm or less, more preferably 200 µm or less, further preferably 150 µm or less, particularly preferably 120 µm or less. In the case where the electrolyte membrane has a multilayer structure, the thickness of the electrolyte membrane refers to the total thickness of all the layers.

The thickness of the electrolyte membrane is measured on a magnified cross-sectional image of the electrolyte membrane (e.g. at a magnification of 100) taken by an optical microscope (model "BX-51", manufactured by Olympus Corporation). In the case where there are convex-concave parts on the surface of the electrolyte membrane, the thickness of the electrolyte membrane is an arithmetic mean of thickness measurements at total 20 points, i.e., 10 points on concave parts of the electrolyte membrane and 10 points on convex parts of the electrolyte membrane. In the case where yarns constituting the woven fabric are contained in convex parts of the electrolyte membrane, the thickness of such yarns is subtracted from the thickness of the convex parts.

### <Electrolyte membrane production method>

As an example of the electrolyte membrane production method, the following may be mentioned.

First, using the fluorinated polymer (I'), membrane P1 containing the fluorinated polymer (I') is obtained. Then, a transfer base material, the membrane P1, the reinforcing material, the membrane P1, and a transfer base material are stacked in this order to obtain a laminate, which is hot-pressed, and the transfer base materials provided on both sides of the laminate are peeled to obtain a precursor membrane having the membrane P1, the reinforcing material and the membrane P1 stacked in this order. The precursor groups in the precursor membrane are converted to ion exchange groups to obtain an electrolyte membrane containing the fluorinated polymer (I) and the reinforcing material.

As a method of forming the membrane P1 from the fluorinated polymer (I'), for example, a method of forming the membrane containing the fluorinated polymer (I') by melt-extrusion or hot pressing, a method of forming more than one membranes containing the fluorinated polymer (I') by melt-extrusion or hot pressing and laminating the membranes, and a method of attaching the fluorinated polymer (I') to a substrate by melt-extrusion or hot pressing may be mentioned. The fluorinated polymer (I') is preferably in the form of pellets or powder, and a uniform shape is preferred.

Specific examples of the transfer base material include a polyethylene terephthalate film (PET), a polyethylene film, a polypropylene film and a polystyrene film.

In the electrolyte membrane production method, for hot pressing, a known hot pressing apparatus such as flat pressing or roll pressing may be employed.

In the case of flat pressing for hot pressing, the contact pressure is preferably 2 MPa or more, more preferably 3 MPa or more in view of adhesion between the films, and is preferably 5 MPa or less, more preferably 4 MPa or less in view of transfer base material release property.

In the case of roll pressing for hot pressing, the linear pressure is preferably 20 kg/cm or more, more preferably 30 kg/cm or more in view of adhesion between the films, and is preferably 50 kg/cm or less, more preferably 40 kg/cm or less in view of transfer base material release property.

The heat temperature for hot pressing is preferably 120°C or higher, more preferably 130°C or higher in view of adhesion between the films, and is preferably 200°C or lower, more preferably 180°C or lower in view of transfer base material release property.

The pressurizing time for hot pressing is preferably 1 minute or more, more preferably 2 minutes or more, and is preferably 5 minutes or less, more preferably 4 minutes or less.

Peeling of the transfer base material may be conducted by a known method and is not particularly limited.

The surface temperature when the transfer base material is peeled is preferably 0°C or higher, more preferably 20°C or higher with a view to suppressing cracking of the electrolyte membrane, and is preferably 50°C or lower, more preferably 40°C or lower in view of transfer base material release property.

The conversion of the precursor groups in the precursor membrane to ion exchange groups may be carried out by, for example, subjecting the precursor membrane to treatment such as hydrolysis and conversion to acid form.

In particular, preferred is contact treatment of the precursor membrane with an aqueous alkaline solution.

The contact treatment of the precursor membrane with the aqueous alkaline solution may be performed by, for example, immersion of the precursor membrane in the aqueous alkaline solution, spraying of the aqueous alkaline solution onto the surface of the precursor membrane, or the like.

The temperature of the aqueous alkaline solution is preferably 30°C or higher, more preferably 40°C or higher, and is preferably 100°C or lower. The contact time of the precursor membrane and the aqueous alkaline solution is preferably 3 minutes or more, more preferably 5 minutes or more, and is preferably 150 minutes or less, more preferably 50 minutes or less.

The aqueous alkaline solution preferably contains an alkali metal hydroxide, a water-soluble organic solvent and water.

Specific examples of the alkali metal hydroxide include sodium hydroxide and potassium hydroxide. In this specification, the water-soluble organic solvent refers to an organic solvent easily soluble in water. Specifically, preferred is an organic solvent with a solubility of 0.1 g or more in 1000 ml of water (20°C), and an organic solvent with a solubility of 0.5 g or more is more preferred. The water-soluble organic solvent preferably contains at least one kind selected from the group consisting of aprotic organic solvents, alcohols and amino alcohols, and more preferably contains an aprotic organic solvent.

The water-soluble organic solvent may be used alone or in combination of two or more.

Specific examples of the aprotic organic solvents include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohols include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohols include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably 1 mass% or more, more preferably 3 mass% or more, and is preferably 60 mass% or less, more preferably 55 mass% or less.

The content of the water-soluble organic solvent in the aqueous alkaline solution is preferably 1 mass% or more, more preferably 3 mass% or more, and is preferably 60 mass% or less, more preferably 55 mass% or less.

The concentration of water in the aqueous alkaline solution is preferably 39 to 80 mass%.

After the contact treatment of the precursor membrane with the aqueous alkaline solution, any treatment for removing the aqueous alkaline solution may be performed. The aqueous alkaline solution may be removed by, for example, washing, with water, the precursor membrane contact-treated with the aqueous alkaline solution.

After the contact treatment of the precursor membrane with the aqueous alkaline solution, the thus-obtained membrane may be further treated by contact with an aqueous acidic solution to convert the ion exchange groups to acid form.

The contact treatment of the precursor membrane with the aqueous acidic solution may be performed by, for example, immersion of the precursor membrane in the aqueous acidic solution or spraying of the aqueous acidic solution onto the surface of the precursor membrane.

The aqueous acidic solution preferably contains an acid component and water.

Specific examples of the acid component include hydrochloric acid and sulfuric acid.

The electrolyte membrane production method was described with reference to a case where the electrolyte membrane contains the reinforcing material as an example, however, the method is not limited thereto. The electrolyte membrane may be produced without using the reinforcing material.

Further, the embodiment in which two membranes P1 containing the fluorinated polymer (I') are used was described, however, the method is not limited thereto. Only one membrane P1 may be used, or three or more membranes P1 may be used. Further, in a case where two or more membranes P1 are used, the fluorinated polymers (I') in the two or more membranes P1 may be the same or different.

### [Membrane electrode assembly]

The membrane electrode assembly of the present disclosure includes the above-mentioned electrolyte membrane, a cathode catalyst layer provided on one surface of the electrolyte membrane and an anode catalyst layer provided on the other surface of the electrolyte membrane.

The membrane electrode assembly of the present disclosure is suitably used for a polymer electrolyte membrane water electrolyzer.

Fig. 1 is a cross-sectional view schematically illustrating an example of the membrane electrode assembly of the present disclosure. In the example of Fig. 1, a membrane electrode assembly 20 includes: an anode 22 with a catalyst layer 26 and a gas diffusion layer 28; a cathode 24 with a catalyst layer 26 and a gas diffusion layer 28; and an electrolyte membrane 10 provided between the anode 22 and the cathode 24 in contact with the respective catalyst layers 26.

The details of the electrolyte membrane 10 are as described above.

Each of the anode 22 and the cathode 24 has a catalyst layer 26 and a gas diffusion layer 28.

The catalyst layer 26 may be, for example, a layer containing a catalyst and a polymer having ion exchange groups.

Specific examples of the catalyst include: a supported catalyst having platinum, a platinum alloy or a platinum-based core-shell catalytic material supported on a carbon carrier; an iridium oxide catalyst; a composite oxide catalyst containing iridium and a different metal element; an iridium oxide alloy-based catalyst; and an iridium oxide-based core-shell catalytic material. As the carbon carrier, a carbon black powder may be mentioned.

The polymer having ion exchange groups is not particularly limited and for example, a known fluorinated polymer having ion exchange groups may be used.

The gas diffusion layer 28 functions to promptly diffuse gas generated from the catalyst layer to the outside of the catalyst layer, and also functions as a current collector. For example, the gas diffusion layer can be in the form of a carbon paper, a carbon cloth, a carbon felt, a sintered product of titanium oxide fiber, a sintered product of titanium oxide particles, or the like. In view of the facts that the anode side is high in potential and carbon materials are oxidized during use, it is preferred to use a sintered product of titanium oxide fiber or a sintered product of titanium oxide particles. A sintered product of titanium oxide may be plated with platinum or the like as necessary.

The gas diffusion layer 28 of the cathode 24 may be made water repellent by applying PTFE or the like.

Although the membrane electrode assembly of Fig. 1 has gas diffusion layers 28, the gas diffusion layers are optional, and the membrane electrode assembly may have no gas diffusion layers.

### <Membrane electrode assembly production method>

A membrane electrode assembly production method includes forming the cathode catalyst layer on one surface of the electrolyte membrane and forming the anode catalyst layer on the other surface of the electrolyte membrane.

For example, the membrane electrode assembly may be produced by using a laminate having the anode catalyst layer on a releasable base material (such as an ETFE sheet) and a laminate having the cathode catalyst layer on a releasable base material (such as an ETFE sheet), bonding the catalyst layers to both sides of the electrolyte membrane and peeling off the releasable base materials.

In each of the above-mentioned laminates, the gas diffusion layer may be provided between the catalyst layer and the releasable base material. In this case, the gas diffusion layer is arranged on the opposite side of the catalyst layer from the electrolyte membrane.

The catalyst layers may be formed by applying a catalyst layer forming ink to predetermined areas (such as surfaces of the releasable base materials), followed by drying as necessary. The catalyst layer forming ink is a dispersion of the polymer having ion exchange groups and the catalyst in a dispersion medium.

### [Water electrolyzer]

The water electrolyzer of the present disclosure includes the above-mentioned membrane electrode assembly, a water supply unit for supplying water to the anode catalyst layer side and a power supply unit for electrical connection between the anode catalyst layer side and the cathode catalyst layer side.

In the water electrolyzer of the present disclosure, when a direct-current voltage is applied by the power supply unit in a state that water is supplied to the anode catalyst layer side by the water supply unit, water is decomposed into oxygen and protons on the anode catalyst layer side. The protons transferring to the cathode catalyst layer side through the electrolyte membrane receive electrons to form hydrogen on the cathode catalyst layer side.

The water electrolyzer of the present disclosure may have the same configuration as that of a known water electrolyzer (for example, an oxygen recovery member to recover the generated oxygen and a hydrogen recovery member to recover the generated hydrogen) except that it has the above members.

### [Hydrogen production method]

The hydrogen production method of the present disclosure includes electrolyzing water (electrolytic solution) to produce hydrogen by the above-described water electrolyzer. According to the hydrogen production method of the present disclosure, which uses the water electrolyzer of the present disclosure, hydrogen can efficiently be produced.

### EXAMPLES

Now, the present invention will be described in further detail with reference to Examples. Ex. 1 to 3 correspond to Examples of the present invention; and Ex. 4 and 5 correspond to Comparative Examples. It should be understood that the present invention is by no means restricted thereto.

### [Differential scanning calorimetry (DSC)]

With respect to the fluorinated polymer, presence or absence of an endothermic peak at 300°C to 350°C was confirmed from a DSC curve measured by using a differential scanning calorimeter (tradename: DSC2500, manufactured by TA Instruments) by the method in accordance with JIS K 7123-1987, by increasing and decreasing the temperature by a cycle of 0°C→350°C→0°C→350°C at 10°C/min.

### [Ion exchange capacity of fluorinated polymer]

The weight of a fluorinated polymer was measured, after 24 hours of incubation in a glove box purged with dry nitrogen, as the dry mass of the fluorinated polymer. Then, the fluorinated polymer was immersed in a 2 mol/L aqueous sodium chloride solution at 60°C for 1 hour. After the fluorinated polymer was washed with ultrapure water and recovered, the solution in which the fluorinated polymer had been immersed was titrated with 0.1 mol/L aqueous sodium hydroxide to determine the ion exchange capacity of the fluorinated polymer (meq/g dry resin).

### [Pinholes]

The number of pinholes (perforations) in the electrolyte membrane was measured by a pinhole detector (model "TRS-70", manufactured by Sanko Electronic Laboratory Co., Ltd.), and evaluation was made based on the following standards.
A: No pinholes
B: One or two pinholes
C: Three or more pinholes

### [Fine particles]

The cross section of the electrolyte membrane was observed with a scanning electron microscope (manufactured by Hitachi High-Tech Corporation, SU8230, accelerating voltage: 1 kV, emission current: 10 µA, probe current: normal, detector condition: LA100(U)) at 10,000 magnifications to obtain an image, in which the size of the fine particles was evaluated based on the following standards. It is considered that the fewer the fine particles are observed, the less inclusion into the fluorinated polymer of high melting point crystalline components containing PTFE and TFE units as the main components is, and the more formation of pinholes in the electrolyte membrane can be suppressed.
A: No fine particles observed.
B: fine particles with diameters of 50 to 100 nm observed.
C: fine particles with diameters of 100 nm or more observed.

### (Abbreviations)

TFE: tetrafluoroethylene
Compound 1: CF₂=CF-O-CF₂CF(CF₃)-O-CF₂CF₂-SO₂F
tBPO: (CH₃)₃COOC(CH₃)₃
HFC-52-13p: CF₃(CF₂)₅H
HFE-347pc-f: CF₃CH₂OCF₂CF₂H
HFC-245fa: CHF₂CH₂CF₃
HCFC-225cb: CCIF₂CF₂CHCIF

Compound 2: monomer represented by the following formula m32-1

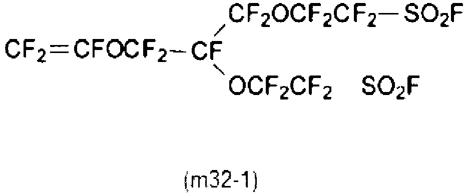

### [Ex. 1]

Into an autoclave (internal capacity: 2 L, reactor made of stainless steel) equipped with a stirrer, 1371 g of compound 1 was put and degassed by cooling with liquid nitrogen. The autoclave was heated until the internal temperature reached 65°C in an oil bath, and nitrogen was injected into the autoclave to adjust the pressure to be 0.2 MPa (gage pressure). 178 g of TFE was introduced into the autoclave, whereby the pressure became 1.27 MPa (gage pressure). 60 g of a mixture of tBPO as a polymerization initiator at a concentration of 0.24 mass% with HFC-52-13p was injected into the autoclave through an injection line. While the pressure of 1.27 MPa (gage pressure) was maintained, TFE was continuously added to conduct polymerization. At a point where the amount of TFE added reached 60 g over 3 hours, the interior of the autoclave was cooled to terminate the polymerization and the system was purged of the gas.

During the above operation, 50% or more of the upper-part surface of the autoclave was covered with a glass wool heat insulating material to keep the temperature at the upper part in the autoclave of 30°C or higher during polymerization. Further, when the polymerization was terminated and the system was purged of the gas, deposits formed at the upper part of the autoclave was removed by a metal rod.

The reaction liquid obtained after removal of the deposits was diluted with HFC-52-13p, then HFE-347pc-f was added to agglomerate the polymer, and the mixture was subjected to filtration. Then, an operation of stirring the polymer in HFC-52-13p and re-agglomerating the polymer with HFE-347pc-f was repeated twice. The mixture was vacuum-dried at 80°C for 16 hours, and fluorinated polymer (I'-1) which is a copolymer of units based on TFE and units based on the compound 1 was recovered.

Taking the above operation one batch, production of the fluorinated polymer (I'-1) was conducted continuously for 10 batches.

The obtained fluorinated polymer (I'-1) was subjected to measurement by DSC, whereupon no endothermic peak was observed within a range of 300 to 350°C. The ion exchange capacity of the fluorinated polymer (I'-1) was 1.25 meq/g dry resin.

The deposits formed on the upper part of the autoclave was analyzed by a microscopic Raman spectroscope under the following conditions and as a result found to be polytetrafluoroethylene (PTFE).
Apparatus: LabRAM HR Evolution (manufactured by HORIBA, Ltd.)
Excitation wavelength: 1064 nm
Power: about 250 mW
Objective lens: 50 magnifications, NA=0.9
Confocal pinhole: 150 µm
Grating: 150 gr/mm
Measurement time: 2sec×20 times

Then, the obtained fluorinated polymer (I'-1) was pulverized and attached by melt-extrusion to a transfer base material formed of a linear low-density polyethylene (LLDPE) film (melting point: 110 to 120°C) to obtain film-provided substrate Y1 having film α1 (thickness: 45 µm) formed on the transfer base material.

Using 18.6-denier yarns of PFA as warp yarns and weft yarns, a woven fabric A1 was produced by plain weaving such that the density of the PFA yarns was 100 yarns/inch. The fabric weight of the woven fabric A1 was 16.3 g/m². The warp yarns and weft yarns used were constituted by monofilaments, and no hot pressing was applied to the woven fabric A1 alone.

The film-provided substrate Y1/woven fabric A1/film-provided substrate Y1 were stacked in this order. The film-provided substrate Y1 was disposed so that the film α1 of the film-provided substrate Y1 was in contact with the woven fabric A1.

The stacked members were hot-pressed by a flat pressing machine at a temperature of 160°C under a contact pressure of 30 MPa for 10 minutes, and the transfer base materials on both sides were peeled at a temperature of 50°C to obtain a precursor membrane.

The precursor membrane was immersed in a solution of dimethyl sulfoxide/potassium hydroxide/water =30/5.5/64.5 (mass ratio) at 95°C for 30 minutes to hydrolyze and convert groups convertible to sulfonic acid functional groups in the precursor membrane to K form sulfonic acid functional groups, and the precursor membrane was washed with water. The obtained membrane was immersed in 1M sulfuric acid to convert terminal end groups from K form to H form, and the membrane was dried to obtain electrolyte membrane 1 (thickness 90 µm) in Ex. 1. The obtained electrolyte membrane 1 was subjected to the above evaluation. The results are shown in Table 1.

### [Ex. 2]

Into a stainless steel autoclave having an internal capacity of 125 mL, 5.77 g of the compound 1, 74.62 g of the compound 2, 8.44 g of HFC-245fa as the solvent, and 24.0 mg of a 50 mass% solution of t-butyl peroxypivalate dissolved in HCFC-225cb were charged and sufficiently degassed under cooling with liquid nitrogen. The mixture was heated to 55°C, and TFE was introduced to adjust the pressure to 0.88 MPaG. While the temperature and the pressure were kept constant, TFE was continuously supplied. 2.5 hours after initiation of the polymerization, the autoclave was cooled to terminate polymerization.

During the above operation, 50% or more of the upper-part surface of the autoclave was covered with a glass wool heat insulating material to keep the temperature at the upper part in the autoclave of 30°C or higher during polymerization.

The obtained reaction liquid was diluted with HFC-52-13p, then HFE-347pc-f was added to agglomerate the polymer, and the mixture was subjected to filtration. Then, an operation of stirring the polymer in HFC-52-13p and re-agglomerating the polymer with HFE-347pc-f was repeated twice. The mixture was vacuum-dried at 180°C for 16 hours, and fluorinated polymer (I'-2) which is a copolymer of units based on TFE, units based on the compound 1 and units based on the compound 2 was recovered.

Taking the above operation one batch, production of the fluorinated polymer (I'-2) was conducted continuously for 10 batches.

The obtained fluorinated polymer (I'-2) was subjected to measurement by DSC, whereupon no endothermic peak was observed within a range of 300 to 350°C. The ion exchange capacity of the fluorinated polymer (I'-2) was 1.79 meq/g dry resin.

In the same manner as in Ex. 1 except that the fluorinated polymer I'-2 was used instead of the fluorinated polymer I'-1, electrolyte membrane 2 (thickness 90 µm) in Ex. 2 was obtained. The obtained electrolyte membrane 2 was subjected to the above evaluation. The results are shown in Table 1.

### [Ex. 3]

In the same manner as in Ex. 1 except that the deposits formed on the upper part of the autoclave were not removed when the polymerization was terminated and the system was purged of the gas, production of fluorinated polymer (I'-3) was conducted continuously for 10 batches.

The fluorinated polymer (I'-3) was subjected to measurement by DSC, whereupon no endothermic peak was observed within a range of 300 to 350°C. The ion exchange capacity of the fluorinated polymer (I'-3) was 1.25 meq/g dry resin.

In the same manner as in Ex. 1 except that the fluorinated polymer (I'-3) was used instead of the fluorinated polymer (I'-1), electrolyte membrane 3 (thickness 90 µm) in Ex. 3 was obtained. The obtained electrolyte membrane 3 was subjected to the above evaluation. The results are shown in Table 1.

### [Ex. 4]

In the same manner as in Ex. 1 except that the upper part of the autoclave was not heat-insulated by a heat insulating material and that the deposits formed on the upper part of the autoclave were not removed when the polymerization was terminated and the system was purged of the gas, production of fluorinated polymer (I'-4) was conducted continuously for 10 batches.

The fluorinated polymer (I'-4) was subjected to measurement by DSC, whereupon an endothermic peak was observed within a range of 300 to 350°C. The ion exchange capacity of the fluorinated polymer (I'-4) was 1.25 meq/g dry resin.

In the same manner as in Ex. 1 except that the fluorinated polymer (I'-4) was used instead of the fluorinated polymer (I'-1), electrolyte membrane 4 (thickness 90 µm) in Ex. 4 was obtained. The obtained electrolyte membrane 4 was subjected to the above measurement. The results are shown in Table 1.

### [Ex. 5]

In the same manner as in Ex. 2 except that the upper part of the autoclave was not heat-insulated by a heat insulating material, production of fluorinated polymer (I'-5) was conducted continuously for 10 batches.

The fluorinated polymer (I'-5) was subjected to measurement by DSC, whereupon an endothermic peak was observed within a range of 300 to 350°C. The ion exchange capacity of the fluorinated polymer (I'-5) was 1.79 meq/g dry resin.

In the same manner as in Ex. 1 except that the fluorinated polymer (I'-5) was used instead of the fluorinated polymer (I'-1), electrolyte membrane 5 (thickness 90 µm) in Ex. 5 was obtained. The obtained electrolyte membrane 5 was subjected to the above measurement. The results are shown in Table 1.

**Table 1**

| | | Ex. 1 | Ex. 2 | Ex. 3 | Ex. 4 | Ex. 5 |
|---|---|---|---|---|---|---|
| Electrolyte membrane | | 1 | 2 | 3 | 4 | 5 |
| Evaluation results | Pinholes | A | A | B | C | C |
| | Fine particles | A | A | B | C | C |

As shown in Table 1, it was confirmed that an electrolyte membrane with suppressed formation of pinholes was obtained by using a fluorinated polymer having TFE units and having precursor groups, of which no endothermic peak was observed within a range of 300 to 350°C measured by DSC (Ex. 1 to 3). It is estimated that in Ex. 1 to 3, formation of deposits of PTFE could be reduced by heat-insulating the upper part of the autoclave with an insulating material.

By comparison between Ex. 1 and Ex. 3, it was found that formation of pinholes could further be suppressed by conducting both heat-insulating the upper part of the autoclave and removing the deposits.

In Ex. 2, no visible deposits were formed.

On the other hand, formation of pinholes in the electrolyte membrane could not sufficiently be suppressed by using a fluorinated polymer having TFE units and having precursor groups, of which an endothermic peak was observed within a range of 300 to 350°C measured by DSC (Ex. 4 to 5). It is estimated that formation of deposits of PTFE increased since the upper part of the autoclave was not heat-insulated with a heat insulating material.

In Ex. 4, deposits were visually confirmed in all batches. In Ex. 5, deposits were visually confirmed in the final batch (the tenth batch).

The entire disclosure of Japanese Patent Application No. 2023-189963 filed on November 7, 2023 including specification, claims, drawings and summary is incorporated herein by reference in its entirety.

### REFERENCE SYMBOLS

10: electrolyte membrane
20: membrane electrode assembly
22: anode
24: cathode
26: catalyst layer
28: gas diffusion layer

## Claims

1. A fluorinated polymer having units based on tetrafluoroethylene and having groups convertible to ion exchange groups,
wherein no endothermic peak is observed within a range of 300 to 350°C measured by differential scanning calorimetry.

2. The fluorinated polymer according to Claim 1, which has units based on a compound represented by the formula (1).
formula (1) CF₂=CF-L-(A)ₙ
In the formula (1), L is a (n+1)-valent perfluorohydrocarbon group having 3 or more carbon atoms, which may contain an etheric oxygen atom, A is a group convertible to a sulfonic acid functional group, and n is 1 or 2.

3. The fluorinated polymer according to Claim 1, which has units based on a compound represented by the formula (1-3) or units based on a compound represented by the formula (1-4): 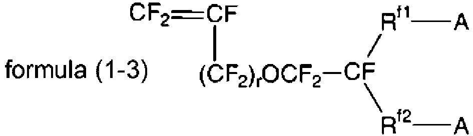 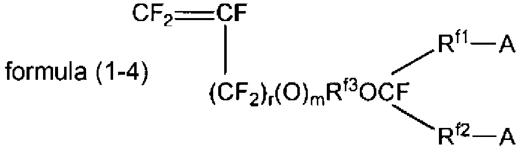 In the formula (1-3) and the formula (1-4), R^{f1} is a perfluoroalkylene group which may contain an oxygen atom between carbon atoms, R^{f2} is a single bond or a perfluoroalkylene group which may contain an oxygen atom between carbon atoms, R^{f3} is a single bond or a perfluoroalkylene group which may contain an oxygen atom between carbon atoms, r is 0 or 1, m is 0 or 1, and A is a group convertible to a sulfonic acid functional group.

4. An electrolyte membrane comprising a fluorinated polymer having, in the fluorinated polymer as defined in any one of Claims 1 to 3, the groups convertible to ion exchange groups converted to ion exchange groups.

5. The electrolyte membrane according to Claim 4, which further contains a reinforcing material.

6. A membrane electrode assembly, which comprises:
the electrolyte membrane as defined in Claim 4,
a cathode catalyst layer provided on one side of the electrolyte membrane, and
an anode catalyst layer provided on the other side of the electrolyte membrane.

7. A water electrolyzer comprising:
the membrane electrode assembly as defined in Claim 6,
a power supply unit for electrical connection between the cathode catalyst layer side and the anode catalyst layer side in the membrane electrode assembly, and
a water supply unit to supply water to the anode catalyst layer side.

8. A hydrogen production method, which comprises electrolyzing water to produce hydrogen by the water electrolyzer as defined in Claim 7.

9. A fluorinated polymer production method, which comprises polymerizing tetrafluoroethylene and a fluorinated monomer having a group convertible to an ion exchange group in a reactor to produce a fluorinated polymer, wherein during the polymerization, an upper-part surface of the exterior of the reactor is covered with a heat insulating material.

10. The fluorinated polymer production method according to Claim 9, wherein after the polymerization, deposits are removed from the upper-part surface of the interior of the reactor.
